# EUROPÄISCHE PATENTSCHRIFT

(11) **EP 0 435 821 B1**
(45) Veröffentlichungstag und Bekanntmachung des Hinweises auf die Patenterteilung: **11.08.1993**
(21) Anmeldenummer: 90810958.0
(22) Anmeldetag: 06.12.1990
(51) Int. Cl.: B24B 55/10, B28D 7/02

(54) **Handgerät mit Fräs- oder Schleifscheibe**
Hand tool equipped with a milling or grinding disc
Outil à main pourvu d'un disque à fraiser ou à meuler

(30) Priorität: 27.12.1989 DE 3943076
(43) Veröffentlichungstag der Anmeldung: 03.07.1991
(73) Patentinhaber: HILTI Aktiengesellschaft, 9494 Schaan (LI)
(72) Erfinder: Rumpp, Gerhard, W-8084 Inning/Ammersee (DE); Hoyss, Franz, W-8170 Wackersberg (DE); Reitberger, Rudolf, W-8000 München 70 (DE)
(74) Vertreter: Wildi, Roland

(56) Entgegenhaltungen:
- DE-A- 3 634 149
- DE-B- 1 090 538
- DE-U- 8 323 459
- US-A- 2 399 629
- US-A- 2 711 620
- US-A- 3 824 745

## Beschreibung

Die Erfindung betrifft ein Handgerät mit auf einer Antriebswelle angeordneter Fräs- oder Schleifscheibe, einer die Fräs- oder Schleifscheibe teilweise umgebenden Schutzhaube und einem von der Schutzhaube abragenden Austrittsstutzen mit Sprühdüse am Austrittsende für das abgetragene Bearbeitungsgut.

Beim Fräsen oder Schleifen von mineralischem Bearbeitungsgut, wie beispielsweise Beton oder Mauerwerk, mit Handgeräten, ist es zu vermeiden, dass die abgetragenen Partikel des Bearbeitungsgutes eine Staubentwicklung in der Umgebung der Bearbeitungsstelle hervorrufen. So sind beispielsweise Handgeräte bekannt, die mit einer Absaugeinrichtung in Verbindung stehen. Die abgetragenen Partikel des Bearbeitungsgutes gelangen in ein Auffangbehältnis, wo beispielsweise mittels eines Filters die Feststoffe aus dem Saugstrom abgesondert werden. Diese Form der Staubverhinderung ist zwar wirkungsvoll, jedoch mit hohem apparativen Aufwand verbunden. Zudem beeinträchtigt die Absaugeinrichtung die Handhabung des Gerätes.

Aus dem DE-GM 83 23 459 ist weiters ein Handgerät mit einer ein rotierendes Fräswerkzeug teilweise umgebenden Schutzhaube bekannt. Das Innere der Schutzhaube ist mit einem Austrittsstutzen für das abgetragene Bearbeitungsgut verbunden. Im Bereich des Austrittsendes des Austrittsstutzens ist eine Sprühdüse angeordnet, die quer zur Austrittsrichtung des Austrittsstutzens Wasser in das Innere des Austrittsstutzens sprüht. Die kleinen für Staubentwicklung massgeblichen Partikel des abgetragenen Bearbeitungsgutes werden so im Austrittsstutzen befeuchtet und niedergeschlagen, wodurch Staubentwicklung verhindert wird.

Der Nachteil dieses bekannten Gerätes besteht darin, dass aufgrund des quer zur Austrittsrichtung eingesprühten Wassers sich die befeuchteten Partikel an den Wandungen des Austrittsstutzens festsetzen. Der lichte Querschnitt des Austrittsstutzens verkleinert sich dadurch rasch, wodurch die Ableitung des abgetragenen Bearbeitungsgutes beeinträchtigt wird.

Der Erfindung liegt die Aufgabe zugrunde, ein Handgerät mit Fräs- oder Schleifscheibe zu schaffen, das bei kleinem apparativen Aufwand ein staub- und störungsfreies Ableiten des abgetragenen Bearbeitungsgutes gewährleistet.

Erfindungsgemäss wird die Aufgabe dadurch gelöst, dass die Mündung der Sprühdüse in Austrittsrichtung des Austrittsstutzens weist.

Durch die in Austrittsrichtung des beispielsweise rohrförmigen Austrittsstutzens weisende Mündung der Sprühdüse wird Flüsssigkeit, vorzugsweise Wasser, in Förderrichtung des abgetragenen Bearbeitungsgutes gesprüht, wodurch ein Festsetzen befeuchteter Partikel an den Wandungen des Austrittsstutzens verhindert wird. Dabei unterstützt der Sprühstrahl die Förderbewegung des Bearbeitungsgutes im Austrittsstutzen. Das befeuchtete Bearbeitungsgut verlässt den Austrittsstutzen, fällt zu Boden und kann beispielsweise durch Aufsaugen eingesammelt werden.

Vorzugsweise ist die Mündung der Sprühdüse im Zentrum des lichten Querschnitts des Austrittsstutzens angeordnet. Auf diese Weise wird eine gleichmässige Verteilung des Sprühstrahles über den lichten Querschnitt des Austrittsstutzens gewährleistet. In jeder Einsatzlage des Handgerätes kommt es somit zu gleichmässigem Befeuchten des abgetragenen Bearbeitungsgutes im Austrittsstutzen.

Die Sprühdüse wird zweckmässig mit Flüssigkeit aus einem externen Reservoir gespeist. Beispielsweise kann ein stationäres Wasserleitungsnetz an die Sprühdüse angeschlossen sein, dessen Wasserdruck für die Ausbildung eines geeigneten Sprühstrahles ausreicht.

Mit Vorteil kann die Sprühdüse aber auch aus einem geräteinternen Reservoir mit Flüssigkeit gespeist werden. Hierdurch wird vor allem Mobilität des Handgerätes erreicht, indem es so auch an Orten einsetzbar ist, wo kein stationäres Wasserleitungsnetz zur Verfügung steht. Die Flüssigkeit wird beispielsweise mittels einer Pumpe unter entsprechendem Druck aus dem Reservoir der Sprühdüse zugeführt.

Die Erfindung wird nachstehend anhand einer Zeichnung, die ein Ausführungsbeispiel wiedergibt, näher erläutert. Es zeigen:
- Fig. 1: ein Handgerät im Arbeitseinsatz, in Seitenansicht;
- Fig. 2: das Handgerät nach Fig. 1 in Draufsicht.

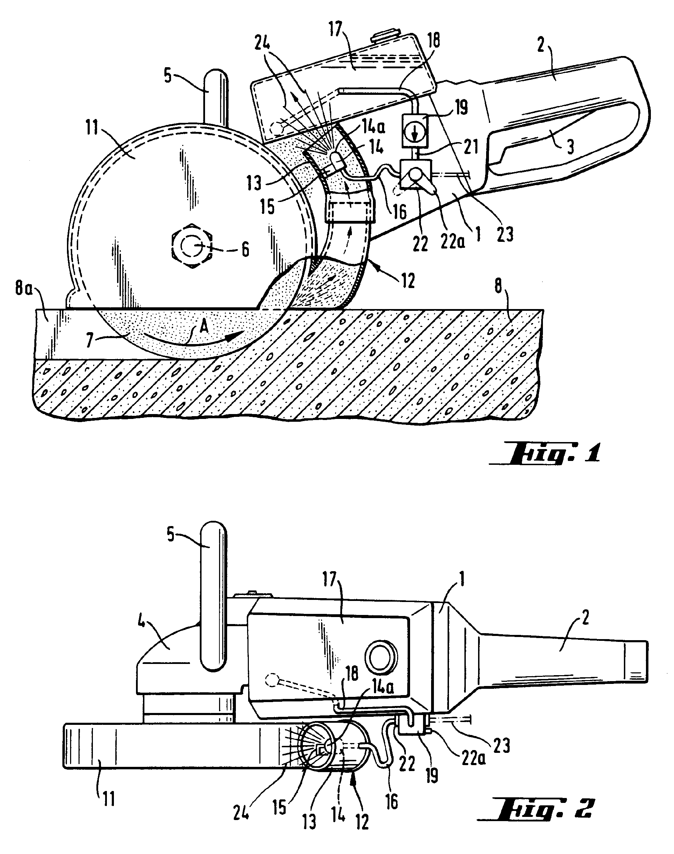

Bei dem dargestellten Handgerät handelt es sich um einen sogenannten Winkelschleifer. Dieser besteht aus einem Motorgehäuse 1, an das ein Handgriff 2 mit Betätigungsschalter 3 angesetzt ist. Dem Handgriff 2 abgewandt sitzt am Motorgehäuse 1 ein Getriebekopf 4, von dem ein Seitenhandgriff 5 abragt. Der Getriebekopf 4 treibt eine in Fig. 1 dargestellte Antriebswelle 6 an, die einer Fräs- oder Schleifscheibe 7 Drehbewegung gemäss Drehpfeil A vermittelt. Das Handgerät dient der Erstellung eines Schlitzes 8a in einem Bearbeitungsgut 8, wie Beton.

Die Fräs- oder Schleifscheibe 7 ist teilweise von einer zum Bearbeitungsgut 8 hin offenen Schutzhaube 11 übergriffen. In das Innere der Schutzhaube 11 mündet ein zweiteiliger Austrittsstutzen 12 mit einem drehbar angeordneten rohrförmigen Endstück 13. Im Bereich des Austrittsendes des Austrittsstutzens 12 bzw im Endstück 13 ist eine Sprühdüse 14 angeordnet und mittels eines Tragwinkels 15 befestigt.

Die Mündung 14a der Sprühdüse 14 weist in Austrittsrichtung des Austrittsstutzens 12 und liegt im Zentrum des lichten Querschnitts des Austrittsstutzens 12. Die Sprühdüse 14 wird über eine Zuleitung 16 beispielsweise aus einem geräteinternen Reservoir 17 mit Wasser versorgt. Hierzu ragt eine Ansaugleitung 18 in das Reservoir 17, die in eine Pumpe 19 mündet. Die Pumpe 19 führt das Wasser mit hohem Druck durch eine Zwischenleitung 21, ein Umstellventil 22 und die Zuleitung 16 zur Sprühdüse 14. Die Sprühdüse 14 kann aber auch von einem externen Reservoir durch eine Leitung 23, wie in Fig. 1 angedeutet, über das Umstellventil 22 gespeist werden. Das Umstellventil 22 ist hierzu mittels eines Stellhebels 22a in die jeweiligen Funktionsstellung zu bringen.

Das unter hohem Druck der Sprühdüse 14 zugeleitete Wasser verlässt diese durch die Mündung 14a in Form eines Sprühstrahles 24 in Austrittsrichtung des Austrittsstutzens 12. Die von der Fräs- oder Schleifscheibe 7 abgetragenen Partikel des Bearbeitungsgutes 8 werden in den Austrittsstutzen 12 geschleudert und durchlaufen diesen in Austrittsrichtung. Im Bereich des Austrittsendes des Austrittsstutzens 12 werden die Partikel durch den Sprühstrahl 24 befeuchtet und verlassen den Austrittsstutzen 12 somit ohne Staubentwicklung. Die den Austrittsstutzen 12 verlassenden Partikel fallen zu Boden und können beispielsweise mittels eines Staubsaugers beseitigt werden.

Um Störungen der Bedienungsperson durch den Sprühstrahl 24 zu vermeiden und die Stelle, wo die befeuchteten Partikel hinfallen, wählen zu können, ist das Endstück 13 gekrümmt ausgebildet und auf dem dieses tragenden Teil des Austrittsstutzens 12 drehbar gelagert.

## Patentansprüche

1. Handgerät mit auf einer Antriebswelle (6) angeordneter Fräs- oder Schleifscheibe (7), einer die Fräs- oder Schleifscheibe (7) teilweise umgebenden Schutzhaube (11) und einem von der Schutzhaube abragenden Austrittsstutzen (12) mit Sprühdüse (14) am Austrittsende für das abgetragene Bearbeitungsgut, **dadurch gekennzeichnet**, dass die Mündung (14a) der Sprühdüse (14) in Austrittsrichtung des Austrittsstutzens (12) weist.

2. Handgerät nach Anspruch 1, dadurch gekennzeichnet, dass die Mündung (14a) der Sprühdüse (14) im Zentrum des lichten Querschnitts des Austrittsstutzens (12) angeordnet ist.

3. Handgerät nach Anspruch 1 oder 2, dadurch gekennzeichnet, dass die Sprühdüse (14) mit Flüssigkeit aus einem externen Reservoir gespeist wird.

4. Handgerät nach Anspruch 1 oder 2, dadurch gekennzeichnet, dass die Sprühdüse (14) mit Flüssigkeit aus einem geräteinternen Reservoir (17) gespeist wird.

## Claims

1. Hand tool comprising a milling or grinding disc (7) arranged on a driveshaft (6), a protective cover (11) which partially surrounds the milling and grinding disc (7), and an outlet socket (12), which protrudes from the protective cover, with a spray nozzle (14) at the end of the outlet for removed processing material, **characterised in that** the mouth (14a) of the spray nozzle (14) faces in the outlet direction of the outlet socket (12).

2. Hand tool according to claim 1, **characterised in that** the mouth (14a) of the spray nozzle (14) is arranged in the centre of the open cross-section of the outlet socket (12).

3. Hand tool according to claim 1 or 2, **characterised in that** the spray nozzle (14) is fed a fluid from an external tank.

4. Hand tool according to claim 1 or 2, **characterised in that** the spray nozzle (14) is fed a fluid from a tank (17) inside the apparatus.

## Revendications

1. Appareil à main pourvu d'un disque à fraiser ou à meuler, comprenant un disque à fraiser ou à meuler (7) monté sur un arbre moteur (6), un capot de protection (11) qui enveloppe partiellement ledit disque à fraiser ou à meuler (7), et une tubulure de sortie (12) s'écartant du capot de protection et munie à l'extrémité de sortie d'un pulvérisateur (14) pour la matière enlevée, caractérisé en ce que la sortie (14a) du pulvérisateur (14) est orientée dans la direction de sortie de la tubulure de sortie (12).

2. Appareil à main selon la revendication 1, caractérisé en ce que la sortie (14a) du pulvérisateur (14) est située au milieu de la largeur intérieure de la tubulure de sortie (12).

3. Appareil à main selon l'une des revendications 1 ou 2, caractérisé en ce que le pulvérisateur (14) est alimenté en liquide à partir d'un réservoir externe.

4. Appareil à main selon l'une des revendications 1 ou 2, caractérisé en ce que le pulvérisateur (14) est alimenté en liquide à partir d'un réservoir (17) logé dans l'appareil.
